# EUROPÄISCHE PATENTSCHRIFT

(11) **EP 3 376 085 B1**
(45) Veröffentlichungstag und Bekanntmachung des Hinweises auf die Patenterteilung: **14.10.2020**
(21) Anmeldenummer: 18161870.3
(22) Anmeldetag: 14.03.2018
(51) Int. Cl.: F16L 3/10

(54) **ROHRSCHELLE**
PIPE CLIP
COLLIER

(30) Priorität: 14.03.2017 DE 102017105451
(43) Veröffentlichungstag der Anmeldung: 19.09.2018
(73) Patentinhaber: Sinn, Edgar Emil, 56587 Strassenhaus (DE)
(72) Erfinder: Sinn, Edgar Emil, 56587 Strassenhaus (DE)
(74) Vertreter: Wimmer, Stephan

(56) Entgegenhaltungen:
- EP-A2- 2 166 265
- DE-U1-202004 017 357
- DE-U1-202011 000 667
- DE-U1-202011 000 809

## Beschreibung

Die vorliegende Erfindung ist auf eine Rohrschelle zum Umfassen und Halten eines Rohrs oder eines Schlauchs bezogen.

Zur Befestigung von Rohren für Wasser, Gase oder andere Fluide werden in der Regel Rohrschellen verwendet. Eine Rohrschelle weist einen Schellenkörper auf, der dazu ausgebildet ist, ein Rohr im Wesentlichen kreisförmig zu umschließen und zu halten. Der Schellenkörper ist oft mit einem Gewinde starr verbunden, mittels dessen er unmittelbar oder mittelbar beispielsweise mit einer Wand oder einer Decke eines Bauwerks oder mit einem Profilträger verbunden werden kann. Der Schellenkörper weist beispielsweise eine mittels einer Spannschraube verschließbare Öffnung und ein gegenüberliegendes Gelenk auf. Ein Rohr kann durch die Öffnung in den Schellenkörper eingelegt werden. Durch Anziehen der Schraube wird der Schellenkörper an die Außenseite des Rohres gedrückt.

Rohrschellen sollen einerseits kostengünstig herstellbar und andererseits auch hohen mechanischen Belastungen standhalten und von Handwerkern - im Idealfall ohne Einarbeitungszeit - schnell und sicher montier- und handhabbar sein. Es existieren zahlreiche verschiedene Bauarten, die jeweils spezifische Vor- und Nachteile aufweisen.

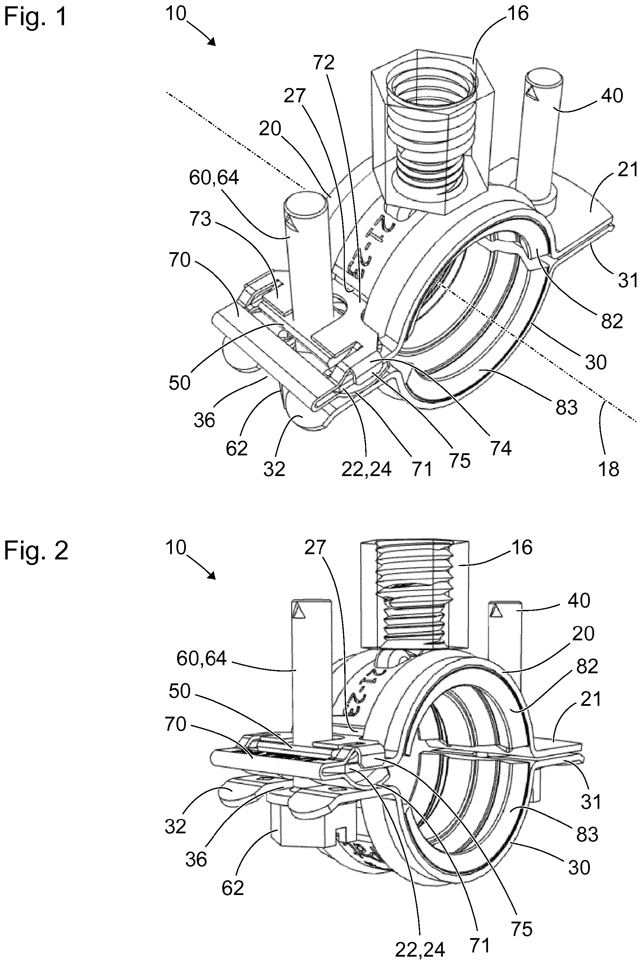

In DE 88 06 714 U1 ist ein Befestigungsbügel 1 mit zwei gelenkig verbundenen Bügelhälften 1a, 1b zum Befestigen einer Rohrleitung 10 beschrieben. Eine im wesentlichen U-förmige Federklammer 9' umschließt zwischen einem oberen Schenkel 13 und einem unteren Schenkel 14 einen nach außen gebogenen Verbindungsflansch 3 der Bügelhälfte 1b und eine Mutter 6 (Figur 2). Am oberen Schenkel 13 sind nach unten umgebogene Lappen oder Laschen 15 vorgesehen, die im montierten Zustand der Federklammer 9' in Vertiefungen oder Ausnehmungen am Verbindungsflansch 3 eingreifen (Mitte der Seite, die oben in der Mitte mit der Nummer 8 und seitlich handschriftlich mit der Nummer 9 versehen ist). Am unteren Schenkel 14 sind nach oben gerichtete Lappen oder Laschen 16 vorgesehen, die so ausgebildet sind, dass diese zwischen sich die Mutter 6 aufnehmen können (ebd.).

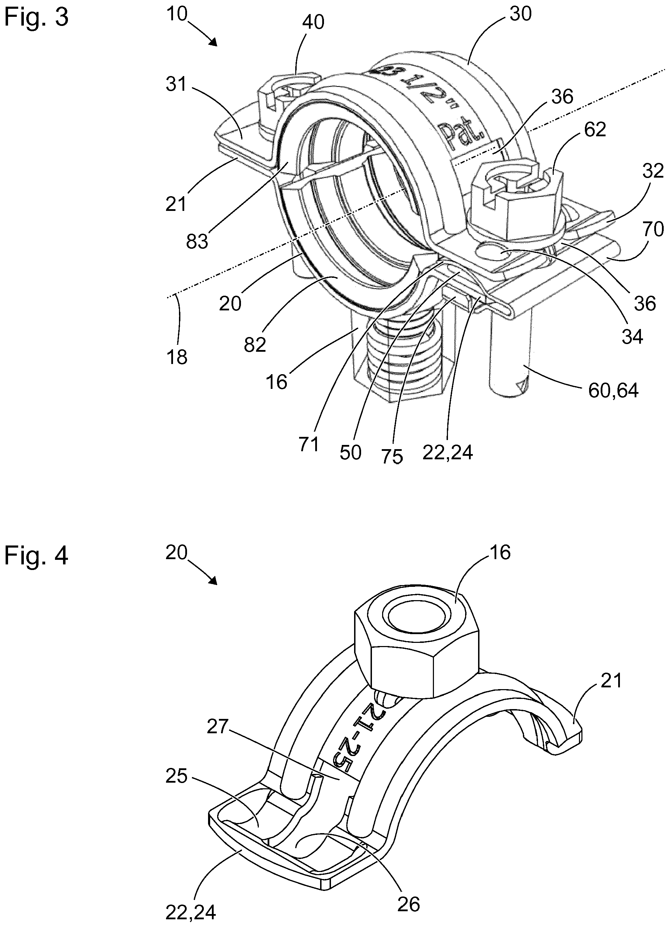

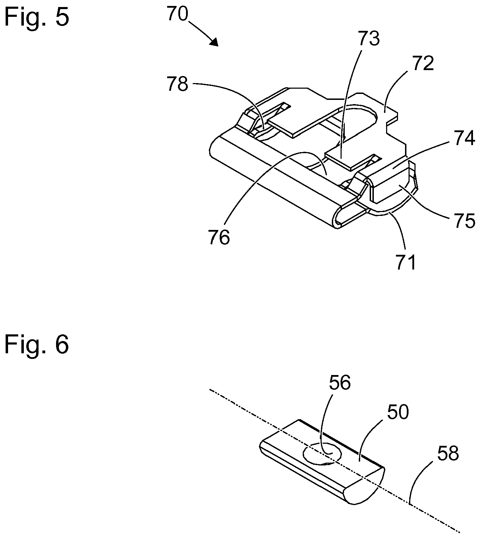

In DE 10 2014 111 513 A1 ist eine Rohrschelle 10 mit einem ersten Bügel 20, einem zweiten Bügel 30, einem Gewindebauteil 50 und einem elastischen Bauteil 70 zum Ausüben einer Kraft auf das Gewindebauteil 50 beschrieben. Das elastische Bauteil 70 umgreift ein Ende 22 des ersten Bügels 20 und das Gewindebauteil 50 (Figuren 1, 2, 6, 7, 10, 11). An dem elastischen Bauteil 70 sind Zungen 72 (Figuren 1, 5) vorgesehen, die in Öffnungen 27 an dem ersten Bügel 20 (Figur 3) eingreifen.

In DE 20 2011 000 809 U1 ist eine Rohrschelle beschrieben, bei der eine Kunststoff-Klemme 4 auf einen Randbereich einer Lasche 22 aufgesetzt ist (Absatz [0018], Figuren 2 bis 6). Eine elastische Klemmkante 42 der Kunststoff-Klemme 4 drückt eine quadratische oder rechteckige Schraubenmutter 5 gegen die Lasche 22 (ebd.). Die Kunststoff-Klemme 4 umfasst Einspannnuten 43, 44, mit denen sie auf die Lasche 22 aufgesetzt ist (Absatz [0019]).

In EP 2 166 265 A2 ist eine Rohrschelle mit einem federelastischen Rückstellelement 13 an einem Spannflansch 6 beschrieben (Absatz [0034], Figur 12). An dem federelastischen Rückstellelement 13 sind Haltestege 15 vorgesehen, zwischen denen der Spannflansch 6 aufgenommen ist (Absatz [0035], Figuren 9 bis 12).

In DE 20 2011 000 667 U1 ist eine Rohrschelle mit einer Federklemme 4, die eine rechteckige Schraubenmutter 5 an einer Lasche 22 festklemmt, beschrieben (Absatz [0015], Figuren 2 bis 5). Die Federklemme 4 umfasst eine obere Klemmbacke 41, die gegen die Lasche 22 drückt, eine untere Klemmbacke 43, die gegen die rechteckige Schraubenmutter 5 drückt, und zwei Positionierungslaschen 44, 45, die als seitliche Anschläge die zwischen ihnen sitzende rechteckige Schraubenmutter 5 gegen seitliches Verschieben sichern (Absätze [0015], [0017], Figuren 3 bis 5). Dreieckige, durch Stanzen geformte Nasen 48 an der Federklemme 4 sind gegen die Lasche 22 gerichtet und greifen in Kerben oder Positionierungslöcher 222 in der Lasche 22 ein (Absatz [0020], Figuren 3, 4).

In DE 20 2004 017 357 U1 ist eine Klapprohrschelle mit einer plattenförmigen Mutterhalterung 34 an einem Spannsteg 22 beschrieben (Absatz [0023], Figur 1). Die plattenförmige Mutterhalterung 34 weist eine Öffnung 36 mit einem Innengewinde, in die eine Spannschraube 26 einschraubbar ist, auf (ebd. Figur 6). Die Mutterhalterung ist kippbar gelagert, indem sie einen nasenförmigen Vorsprung 42 aufweist, der in eine entsprechend angepasste Aussparung in einer wulst- oder sickenartigen radial sich erstreckenden äußeren Erhebung 44 des Schellenbügels 12 eingreift (Absatz [0024], Figur 6). Ein Spannband 38 beaufschlagt die plattenförmige Mutterhalterung 34 mit einer Kraft in Richtung einer Außenfläche 30 des ersten Spannstegs 22 (Absatz [0024], Figur 2).

Eine Aufgabe der vorliegenden Erfindung besteht darin, eine verbesserte Rohrschelle zu schaffen, insbesondere eine Rohrschelle, die einerseits möglichst kostengünstig herstellbar und andererseits möglichst einfach, schnell und sicher handhabbar und robust ist.

Diese Aufgabe wird durch die Gegenstände der unabhängigen Ansprüche gelöst.

Weiterbildungen sind in den abhängigen Ansprüchen angegeben.

Eine Rohrschelle umfasst einen Schellenkörper mit einem ersten Bügel und einem zweiten Bügel zum Umfassen und Halten eines Rohr oder eines Schlauchs, eine Gelenkeinrichtung zum gelenkigen Verbinden eines ersten Endes des ersten Bügels mit einem ersten Ende des zweiten Bügels, ein Gewindebauteil mit einem Innengewinde, wobei das Gewindebauteil schwenkbar an einem Flansch an dem zweiten Ende des ersten Bügels gelagert ist, und ein elastisches Bauteil zum Ausüben einer Kraft auf das Gewindebauteil zum elastischen Halten des Gewindebauteils in einer vorbestimmten Winkelposition oder in einem vorbestimmten Bereich von Winkelpositionen, wobei das elastische Bauteil den Flansch an dem zweiten Ende des ersten Bügels an drei Seiten jeweils zumindest teilweise umgreift.

Die Gelenkeinrichtung ist zum Schwenken des zweiten Bügels relativ zu dem ersten Bügel vorgesehen. Die Gelenkeinrichtung kann für eine formschlüssige gelenkige Verbindung der Bügel ausgebildet sein, beispielsweise in Gestalt zweier ineinandergreifender Haken oder eines in eine Öse eingreifenden Hakens. Alternativ kann die Gelenkeinrichtung eine Spannschraube zum Verbinden der ersten Enden der Bügel umfassen. Alternativ kann die Gelenkeinrichtung ein elastisch und/oder plastisch verformbares Bauteil umfassen. Der Flansch an dem zweiten Ende des ersten Bügels erstreckt sich insbesondere in einer Richtung, die bezogen auf eine Längsachse eines in der vorgesehenen Weise in die Rohrschelle eingelegten Rohrs oder Schlauchs radial oder im Wesentlichen radial (also orthogonal zu dieser Längsachse) ist. Der Flansch erstreckt sich von nachfolgend beschriebenen Abweichungen (insbesondere einer Wölbung) abgesehen insbesondere näherungsweise in einer Ebene, die die Längsachse eines in der vorgesehenen Weise in die Rohrschelle eingelegten Rohrs oder Schlauchs enthält. Der Flansch ist insbesondere oben und unten jeweils im wesentlichen flächig und weist an drei Seiten Kanten oder Ränder auf, die jeweils im Wesentlichen gerade oder gekrümmt sein können.

Das elastische Bauteil umgreift erfindungsgemäß an drei Seiten jeweils zumindest teilweise die Ränder des Flansches. Der radial außen liegende Rand des Flansches, der insbesondere parallel oder im Wesentlichen parallel zu der Längsachse eines in der vorgesehenen Weise in die Rohrschelle eingelegten Rohrs oder Schlauchs ist, wird von dem elastischen Bauteil insbesondere vollständig umgriffen. Die seitlichen Ränder des Flansches, die insbesondere radial oder im wesentlichen Radial angeordnet sind, werden von dem elastischen Bauteil insbesondere zumindest teilweise umgriffen.

Das elastische Bauteil umgreift den Flansch - insbesondere eine Kante des Flansches - an einer Seite teilweise, wenn nur ein Teil des Flansches oder seiner Kante an dieser Seite durch das elastische Bauteil verdeckt ist. Das elastische Bauteil umgreift den Flansch - insbesondere eine Kante des Flansches - an einer Seite vollständig, wenn der Flansch oder seine Kante an dieser Seite durch das elastische Bauteil vollständig verdeckt ist.

Das elastische Bauteil bildet somit insbesondere eine Tasche, in die der Flansch zumindest teilweise eingeführt ist.

Das Gewindebauteil ist vorgesehen und ausgebildet, um mit einer Spannschraube zusammenzuwirken, die in das Innengewinde eingreift. Das elastische Bauteil ist ausgebildet, um das Gewindebauteil und mit dem Gewindebauteil eine Spannschraube, die in das Innengewinde des Gewindebauteils eingreift, in eine vorbestimmte Winkelposition oder in einen vorbestimmten Bereich von Winkelpositionen zu bewegen. Eine Auslenkung des Gewindebauteils und der Spannschraube aus der vorbestimmten Winkelposition oder aus dem vorbestimmten Bereich von Winkelpositionen heraus ist gegen die rückstellende Kraft des elastischen Bauteils möglich. Die Rohrschelle ist insbesondere so ausgebildet, dass das zweite Ende des zweiten Bügels den Kopf der Spannschraube beim Schließen der Rohrschelle aus einer vorbestimmten Position auslenkt. Sobald das zweite Ende des zweiten Bügels an dem Kopf der Spannschraube ganz vorbei bewegt ist, bewegt das elastische Bauteil das Gewindebauteil und damit auch die Spannschraube in eine Position zurück, in der der Kopf der Spannschraube in einen Schlitz in dem zweiten Ende des zweiten Bügels eingreift. So ist die Rohrschelle geschlossen, wenn auch nicht gespannt. Danach kann die Rohrschelle durch Drehen der Spannschraube gespannt werden bis sie mit einem erwünschten Druck an der Oberfläche eines zu haltenden Rohrs oder Schlauchs anliegt.

Das elastische Bauteil wirkt insbesondere unmittelbar auf das Gewindebauteil. Das Gewindebauteil weist beispielsweise die Gestalt eines Zylinders mit einem halbkreisförmigen Querschnitt auf, wobei die Achse der Zylinder- bzw. Translationssymmetrie orthogonal zu der Achse des Innengewindes des Gewindebauteils ist.

Indem das elastische Bauteil den Flansch an dem zweiten Ende des ersten Bügels an drei Seiten jeweils zumindest teilweise umgreift, kann eine Rotation des elastischen Bauteils relativ zu dem Flansch an dem zweiten Ende des ersten Bügels behindert oder unterbunden werden. Dies kann die Zuverlässigkeit der Rohrschelle sowohl beim Schließen als vor allem auch beim Öffnen verbessern.

Bei einer Rohrschelle, wie sie hier beschrieben ist, umgreift das elastische Bauteil insbesondere von der Außenseite der Rohrschelle her das Gewindebauteil und den Flansch an dem zweiten Ende des ersten Bügels, wobei das elastische Bauteil an zwei einander gegenüber liegenden Rändern jeweils einen abgewinkelten Bereich aufweist, und wobei der Flansch an dem zweiten Ende des ersten Bügels zumindest teilweise zwischen den abgewinkelten Bereichen des elastischen Bauteils angeordnet ist.

Jeder abgewinkelte Bereich des elastischen Bauteils umgreift insbesondere einen Randabschnitt des Flansches an einer Seite des Flansches ganz oder teilweise. Die von den abgewinkelten Bereichen des elastischen Bauteils ganz oder teilweise umgriffenen Randabschnitte des Flansches sind insbesondere jeweils bezogen auf die Längsachse eines in der vorgesehenen Weise in die Rohrschelle eingelegten Rohrs oder Schlauchs radial angeordnet.

Die abgewinkelten Bereiche umgreifen also den Flansch seitlich, während gleichzeitig das übrige elastische Bauteil den Flansch von oben und unten und von der Außenseite der Rohrschelle her umgreift.

Bei einer Rohrschelle, wie sie hier beschrieben ist, sind die abgewinkelten Bereiche des elastischen Bauteils insbesondere parallel zu einander angeordnet.

Bei einer Rohrschelle, wie sie hier beschrieben ist, entspricht der Abstand der abgewinkelten Bereiche des elastischen Bauteils insbesondere im Wesentlichen der Breite des Flansches an dem zweiten Ende des ersten Bügels.

Die Breite des Flansches wird dabei in Richtung parallel zu der Längsachse eines in der vorgesehenen Weise in die Rohrschelle eingelegten Rohrs oder Schlauchs gemessen.

Die abgewinkelten Bereiche des elastischen Bauteils können also flächig und mit geringem Abstand den seitlichen Rändern des Flansches 24 gegenüberliegen. Bereits bei einer Rotation des elastischen Bauteils relativ zu dem Flansch um einen geringen Winkel liegen die abgewinkelten Bereiche des elastischen Bauteils an den Rändern des Flansches an und unterbinden formschlüssig eine weitere Rotation.

Bei einer Rohrschelle, wie sie hier beschrieben ist, sind die abgewinkelten Bereiche des elastischen Bauteils insbesondere orthogonal zu einer Längsachse eines in der vorgesehenen Weise in die Rohrschelle eingelegten Rohrs oder Schlauchs angeordnet.

Die abgewinkelten Bereiche sind insbesondere eben oder im Wesentlichen eben, wobei die Flächennormalen parallel zu der Längsachse eines in der vorgesehenen Weise in die Rohrschelle eingelegten Rohrs oder Schlauchs angeordnet sind.

Bei einer Rohrschelle, wie sie hier beschrieben ist, ist insbesondere jeder abgewinkelte Bereiche jeweils an einer Biegekante gegenüber einem angrenzenden Bereich des elastischen Bauteils abgewinkelt, wobei diese Biegekanten parallel oder im Wesentlichen parallel zu einander und orthogonal oder im Wesentlichen orthogonal zu einer Längsachse eines in der vorgesehenen Weise in die Rohrschelle eingelegten Rohrs oder Schlauchs angeordnet sind.

Bei einer Rohrschelle, wie sie hier beschrieben ist, sind die abgewinkelten Bereiche insbesondere jeweils im Wesentlichen rechteckig ausgebildet.

Bei einer im Wesentlichen rechteckigen Ausgestaltung der abgewinkelten Bereiche weisen diese jeweils zwei parallele Ränder auf, die im Wesentlichen orthogonal zu den seitlichen Rändern des Flansches an dem zweiten Ende des ersten Bügels sind. Bei einem Drehmoment auf das elastische Bauteil relativ zu dem Flansch an dem zweiten Ende des ersten Bügels kann eine solche Orthogonalität ein Aufgleiten, wie es bei einer schrägen oder windschiefen Anordnung der Kanten möglich wäre, unterbinden und die Zuverlässigkeit des formschlüssigen Haltens des elastischen Bauteils an dem Flansch auch im Fall eines größeren einwirkenden Drehmoments verbessern.

Bei einer Rohrschelle, wie sie hier beschrieben ist, sind die abgewinkelten Bereiche jeweils insbesondere im Wesentlichen länglich rechteckig mit einem Paar längerer Seiten und einem Paar kürzerer Seiten, wobei die Biegekanten je eine der beiden längeren Seiten jedes rechteckigen abgewinkelten Bereichs bilden.

Bei einer Rohrschelle, wie sie hier beschrieben ist, ist das elastische Bauteil insbesondere aus einem mehrfach gebogenen Stück Metallblech gebildet. Die Bildung des elastischen Bauteils aus einem Stück Metallblech ermöglicht eine mechanische Robustheit und Zuverlässigkeit, vor allem auch nach mehrfachem Öffnen und Schließen der Rohrschelle, die beispielsweise mit einem elastischen Bauteil aus Kunststoff nicht oder nicht ohne Weiteres erreichbar wäre.

Bei einer Rohrschelle, wie sie hier beschrieben ist, unterbinden die abgewinkelten Bereiche des elastischen Bauteils insbesondere zumindest entweder eine rotatorische oder eine translatorische Bewegung des elastischen Bauteils relativ zu dem Flansch an dem zweiten Ende des ersten Bügels formschlüssig.

Bei einer Rohrschelle, wie sie hier beschrieben ist, weist das elastische Bauteil erfindungsgemäß eine Zunge auf, die in eine Öffnung in dem ersten Bügel eingreift.

Eine Rohrschelle umfasst einen Schellenkörper mit einem ersten Bügel und einem zweiten Bügel zum Umfassen und Halten eines Rohrs oder eines Schlauchs, eine Gelenkeinrichtung zum gelenkigen Verbinden eines ersten Endes des ersten Bügels mit einem ersten Ende des zweiten Bügels, ein Gewindebauteil mit einem Innengewinde, wobei das Gewindebauteil schwenkbar an einem Flansch an dem zweiten Ende des ersten Bügels gelagert ist, und ein elastischen Bauteil zum Ausüben einer Kraft auf das Gewindebauteil zum elastischen Halten des Gewindebauteils in einer vorbestimmten Winkelposition oder in einem vorbestimmten Bereich von Winkelpositionen, wobei das elastische Bauteil eine Zunge aufweist, die in eine Öffnung in dem ersten Bügel eingreift.

Bei einer Rohrschelle, wie sie hier beschrieben ist, ist die Zunge insbesondere im Wesentlichen rechteckig.

Abweichend von einer ideal rechteckigen Gestalt kann die Zunge abgerundete oder abgeschrägte Ecken aufweisen.

Bei einer Rohrschelle, wie sie hier beschrieben ist, unterbindet der Eingriff der Zunge des elastischen Bauteils in die Öffnung in dem ersten Bügel insbesondere zumindest entweder eine rotatorische oder eine translatorische Bewegung des elastischen Bauteils relativ zu dem Flansch an dem zweiten Ende des ersten Bügels formschlüssig.

Bei einer Rohrschelle, wie sie hier beschrieben ist, ist das Gewindebauteil insbesondere an einer Rotation um die Achse seines Innengewindes relativ zu dem elastischen Bauteil formschlüssig gehindert.

Bei einer Rohrschelle, wie sie hier beschrieben ist, umfasst das elastische Bauteil insbesondere zwei Stege, die an entgegengesetzten Enden des Gewindebauteils angeordnet sind und eine Rotation des Gewindebauteils relativ zu dem elastischen Bauteil formschlüssig unterbinden, wobei jeder der beiden Stege streifenförmig und an beiden Enden mit angrenzenden Bereichen des elastischen Bauteils verbunden ist.

Das elastische Bauteil ist insbesondere aus einem gestanzten oder geschnittenen und gebogenen Federblech gebildet. Die beiden Stege sind insbesondere jeweils durch zwei parallele Schnitte gebildet, so dass beide Enden jeden Stegs monolithisch mit den angrenzenden Bereichen des elastischen Bauteils verbunden sind.

Bei einer Rohrschelle, wie sie hier beschrieben ist, umfasst der zweite Bügel des Schellenkörpers insbesondere eine Öffnung, die so angeordnet und ausgebildet ist, dass bei geschlossener und gespannter Rohrschelle der Kopf der die Rohrschelle schließenden Spannschraube teilweise in die Öffnung eingreift.

Die Öffnung in dem zweiten Bügel ist insbesondere so ausgebildet, dass der Kopf der Spannschraube so weit in die Öffnung eingreifen kann, dass der Kopf der Spannschraube an einem elastischen Profil an der Innenseite des zweiten Bügels anliegen kann. Das elastische Profil kann als Dämpfung wirken, die ein unbeabsichtigtes Öffnen der Spannschraube durch Erschütterungen der Rohrschelle verhindern oder das Risiko dazu vermindern kann.

Nachfolgend werden Ausführungsbeispiele anhand der beigefügten Figuren näher erläutert. Es zeigen:
- Figur 1: eine schematische axonometrische Darstellung einer Rohrschelle;
- Figur 2: eine weitere schematische axonometrische Darstellung der Rohrschelle aus Figur 1;
- Figur 3: eine weitere schematische axonometrische Darstellung der Rohrschelle aus den Figuren 1 und 2;
- Figur 4: eine schematische axonometrische Darstellung eines ersten Bügels einer Rohrschelle;
- Figur 5: eine schematische axonometrische Darstellung eines elastischen Bauteils für eine Rohrschelle;
- Figur 6: eine schematische axonometrische Darstellung eines Gewindebauteils für eine Rohrschelle.

Figur 1 zeigt eine schematische axonometrische Darstellung einer Rohrschelle 10 mit einer Befestigungsmutter 16. Die Befestigungsmutter 16 ist transparent dargestellt, so dass die Konturen eines Innengewindes in der Befestigungsmutter 16 sichtbar sind. Die Rohrschelle 10 ist zum Umfassen und Halten eines Rohrs oder Schlauchs, dessen Längs- und Symmetrieachse der Mittelachse 18 der Rohrschelle 10 entspricht, vorgesehen.

Die Rohrschelle 10 umfasst einen ersten Bügel 20 mit einem ersten Ende 21 und einem zweiten Ende 22 und einen zweiten Bügel 30 mit einem ersten Ende 31 und einem zweiten Ende 32. Die ersten Enden 21, 31 der Bügel 20, 30 sind bei dem dargestellten Beispiel durch eine erste Spannschraube 40 miteinander verbunden. Die erste Spannschraube greift durch ein Langloch in dem ersten Ende 31 des zweiten Bügels 30 hindurch in ein Gewinde in dem ersten Ende 21 des ersten Bügels 20 ein. In Figur 1 ist die Rohrschelle in einem vollständig geschlossenen und gespannten Zustand gezeigt, in dem die ersten Enden 21, 31 der Bügel 20, 30 an einander anliegen.

Das zweite Ende 22 des ersten Bügels 20 wird durch einen Flansch 24 gebildet. Ein in Figur 1 nur teilweise sichtbares Gewindebauteil 50 ist an dem Flansch 24 des zweiten Bügels 20 angeordnet. Das zweite Ende 32 des zweiten Bügels 20 wird durch zwei parallele Zungen gebildet. Ein Schaft 64 einer zweiten Spannschraube 60 mit einem in Figur 1 weitgehend verborgenen Kopf 62 greift durch einen Einschnitt 36 zwischen den beiden das zweite Ende 32 des zweiten Bügels 20 bildenden Zungen und durch eine in Figur 1 nicht sichtbare Öffnung in dem Flansch 24 hindurch in ein korrespondierendes Innengewinde in dem Gewindebauteil 50.

Die Rohrschelle 10 umfasst ein elastisches Bauteil 70. Bei dem dargestellten Beispiel ist das elastische Bauteil 70 durch Stanzen, Schneiden oder Fräsen und Biegen aus einem Federstahlblech gebildet. Das elastische Bauteil 70 umfasst den Flansch 24 des ersten Bügels 20 von außen, also aus einer Richtung orthogonal zu der Mittelachse 18 der Rohrschelle 10.

Ein erster Bereich 71 des elastischen Bauteils 70 liegt an dem Flansch 24 des ersten Bügels 20 an. Der erste Bereich 71 weist im Wesentlichen die Gestalt eines Ausschnitts einer Mantelfläche eines Kreiszylinders auf. Ein zweiter Bereich 73 des elastischen Bauteils 70 liegt an dem Gewindebauteil 50 an. Der Flansch 24 des ersten Bügels 20 und das Gewindebauteil 50 sind zwischen dem ersten Bereich 71 und dem zweiten Bereich 73 des elastischen Bauteils 70 angeordnet.

Das elastische Bauteil 70 umfasst eine Zunge 72, die nahe dem zweiten Bereich 73 des elastischen Bauteils 70 angeordnet ist. Bei dem dargestellten Beispiel liegen die Zunge 72 und der zweite Bereich 73 in einer Ebene. Die Zunge 72 des elastischen Bauteils 70 greift in eine Öffnung 27 in dem ersten Bügel 20 ein. Die Zunge 72 und die Öffnung 27 sind so angeordnet und ausgebildet, dass die Zunge 72 an dem elastischen Bauteil 70 spiel- und reibungsarm in der Öffnung 27 in dem ersten Bügel 20 geführt ist.

Das elastische Bauteil 70 umfasst an zwei parallelen und von einander abgewandten Randbereichen zwei symmetrisch angeordnete abgewinkelte Bereiche 75. Die abgewinkelten Bereiche sind jeweils im Wesentlichen eben und näherungsweise rechteckig mit abgerundeten oder abgeschrägten Ecken. Biegekanten 74 zwischen den abgewinkelten Bereichen 75 und angrenzenden Bereichen des elastischen Bauteils 70 sind parallel zu einander und orthogonal zu der Mittelachse 18 der Rohrschelle 10. Die ebenen Abschnitte der abgewinkelten Bereiche 75 sind parallel zu einander, orthogonal zu dem an dem Gewindebauteil 50 anliegenden zweiten Bereich 73 und orthogonal zu der Mittelachse 18 des Rohrschelle 10.

Die Rohrschelle 10 umfasst ferner elastische Profile 82, 83 aus Gummi, Elastomer oder einem anderen elastischen Material an den Innenseiten der Bügel 20, 30. Bei dem dargestellten Beispiel sind die elastischen Profile 82, 38 durch Klebungen mit den einem zu umgreifenden Rohr oder Schlauch zugewandten Innenseiten der Bügel 20, 30 verbunden.

Der Einschnitt 36 an dem zweiten Ende 32 des zweiten Bügels 30 erstreckt sich so weit in den gekrümmten Bereich des zweiten Bügels 30 hinein und ist dort so breit, dass der Kopf 62 der zweiten Spannschraube 60 dort teilweise in diesen Einschnitt 36 eingreifen kann. Dadurch liegt der Kopf 62 der zweiten Spannschraube 60 an dem elastischen Profil 83 an der Innenseite des zweiten Bügels 30 an. Das elastische Profil 83 kann dadurch auch zur Dämpfung von Erschütterungen, denen die Rohrschelle 10 ausgesetzt ist, dienen und die Wahrscheinlichkeit eines unbeabsichtigten Lösens der zweiten Spannschraube 60 durch Erschütterungen der Rohrschelle 10 mindern.

Ferner kann der in den gekrümmten Bereich des zweiten Bügels 30 hinein reichende Einschnitt 36 an dem zweiten Ende 32 des zweiten Bügels 30 die Verwendung eines Steckschlüssels zum Drehen der zweiten Spannschraube 60 vereinfachen oder erste ermöglichen.

Figur 2 zeigt eine weitere schematische axonometrische Darstellung der Rohrschelle 10 aus Figur 1. In Figur 2 ist erkennbar, dass die abgewinkelten Bereiche 75 des elastischen Bauteils 70 den Flansch 24 an dem zweiten Ende 22 des ersten Bügels 20 seitlich zumindest teilweise umgreifen.

Figur 3 zeigt eine weitere schematische axonometrische Darstellung der Rohrschelle 10 aus den Figuren 1 und 2. Im Gegensatz zu den Figuren 1 und 2 sind in Figur 3 der erste Bügel 20 mit der Befestigungsmutter 16 unten und der zweite Bügel 30 oben dargestellt. Deshalb ist der Kopf 62 der zweiten Spannschraube in Figur 3 vollständig sichtbar.

Ferner sind Erhebungen 34 an den das zweite Ende 32 des zweiten Bügels 30 bildenden Zungen sichtbar. Diese Erhebungen 34 führen den Kopf 6 der zweiten Spannschraube 60. Damit reduzieren die Erhebungen 34 die Wahrscheinlichkeit, dass der Schaft 64 der zweiten Spannschraube 60 aus dem Einschnitt 36 zwischen den das zweite Ende 32 des zweiten Bügels 30 bildenden Zungen heraus schwenkt.

Figur 4 zeigt eine schematische axonometrische Darstellung eines ersten Bügels 20 einer Rohrschelle, die in einigen Merkmalen, Eigenschaften und Funktionen der anhand der Figuren 1 bis 3 dargestellten Rohrschelle entspricht.

Der in Figur 4 dargestellte erste Bügel 20 unterscheidet sich von dem ersten Bügel 20 der anhand der Figuren 1 bis 3 dargestellten Rohrschelle insbesondere dadurch, dass das erste Ende 21 für eine gelenkige Verbindung mit einem ersten Ende eines zweiten Bügels ohne eine Spannschraube vorgesehen und ausgebildet ist. Lediglich das zweite Ende 22 des in Figur 4 dargestellten ersten Bügels 20 ist dafür vorgesehen, mittels einer Spannschraube mit einem zweiten Ende des zweiten Bügels verbunden zu werden. Der Flansch 24, der das zweite Ende 22 des in Figur 4 gezeigten ersten Bügels 20 bildet, gleicht dem Flansch 24 des ersten Bügels der anhand der Figuren 1 bis 3 dargestellten Rohrschelle.

Der Flansch 24 bildet eine Mulde 25 für das Gewindebauteil 50 (vgl. Figuren 1 bis 3).

In dem das zweite Ende des ersten Bügels 20 bildenden Flansch 24 ist eine Öffnung 26 für den Schaft 64 der zweiten Spannschraube 60 (vgl. Figuren 1 bis 3) vorgesehen. In dem an den Flansch 24 angrenzenden gekrümmten Bereich des ersten Bügels 20 ist die Öffnung 27 für die Zunge 72 des elastischen Bauteils 70 (vgl. Figuren 1 bis 3) angeordnet. Bei dem dargestellten Beispiel gehen die Öffnung 26 in dem Flansch 24 und die Öffnung 27 in dem angrenzenden Bereich des ersten Bügels 20 in einander über.

Figur 5 zeigt eine schematische axonometrische Darstellung des elastischen Bauteils 70 der anhand der Figuren 1 bis 3 dargestellten Rohrschelle oder für den anhand der Figur 4 dargestellten ersten Bügel 20.

In Figur 5 ist der erste Bereich 71, der die Gestalt eines Ausschnitts eines Mantels eines Kreiszylinders aufweist, erkennbar. Bei dem dargestellten Beispiel wird dieser erste Bereich 71 durch zwei Zungen gebildet, zwischen denen ein Einschnitt 76 angeordnet ist. Dieser Einschnitt 76 ist in Figur 5 teilweise durch den zur Anlage an dem Gewindebauteil 50 (vgl. Figuren 1 bis 3) vorgesehenen zweiten Bereich 73 verdeckt. Der Einschnitt nimmt bei der zusammengesetzten Rohrschelle den Schaft 64 der zweiten Spannschraube 60 auf.

In Figur 5 ist die Kontur der Zunge 72 des elastischen Bauteil 70 erkennbar. Von einem Übergangsbereich zu dem zweiten Bereich 73 und abgerundeten oder abgeschrägten Ecken abgesehen weist die Zunge 72 eine rechteckige Gestalt auf.

Ferner sind in Figur 5 zwei parallele Stege 78 beiderseits des für die Anlage an dem Gewindebauteil 50 (vgl. Figuren 1 bis 3) vorgesehenen zweiten Bereichs 73 erkennbar. Jeder der beiden Stege 78 geht aus dem das elastische Bauteil 70 bildenden Federstahlblech durch zwei seine Ränder definierenden parallele Schnitte und eine nachfolgende Verformung hervor. Beide Enden jedes Stegs 78 sind mit angrenzenden Bereichen des elastischen Bauteils 70 monolithisch verbunden.

Die Stege 78 sind weitgehend außerhalb der Ebene angeordnet, in der der zur Anlage an dem Gewindebauteil (vgl. Figuren 1 bis 3) vorgesehene zweite Bereich 73 liegt. Der Abstand der Stege 78 entspricht der Länge des Gewindebauteils 50.

Figur 6 zeigt eine schematische axonometrische Darstellung des Gewindebauteils 50 der anhand der Figuren 1 bis 3 dargestellten Rohrschelle oder für den anhand der Figur 4 dargestellten ersten Bügel 20.

Das Gewindebauteil 50 weist die Gestalt eines Zylinders mit halbkreisförmigem Querschnitt auf. Die Zylinderachse ist parallel zu einer Schwenkachse 58 des Gewindebauteils 50, die durch die Krümmung seines bei der Darstellung in Figur 6 vom Betrachter abgewandten Oberflächenbereich bestimmt ist. Das Gewindebauteil 50 weist ein Innengewinde 56 auf, das zu einem Außengewinde der Spannschraube 60 korrespondiert. Die Symmetrieachse des Innengewindes 56 ist orthogonal zu der Schwenkachse 58 des Gewindebauteils 50.

Bei der anhand der Figuren 1 bis 3 dargestellten zusammengesetzten Rohrschelle 10 liegt der gekrümmte Oberflächenbereich des Gewindebauteils 50 in der Mulde 25 in dem das zweite Ende 22 des ersten Bügels 20 bildenden Flansch 24. Das elastische Bauteil 70 hält das Gewindebauteil 50 in der Mulde 25. Jede Auslenkung des Gewindebauteils 50 und mit ihm der zweiten Spannschraube 60 aus der in den Figuren 1 bis 3 gezeigten Winkelposition bewirkt eine elastische Verformung des elastischen Bauteils 70.

Bei der anhand der Figuren 1 bis 3 dargestellten zusammengesetzten Rohrschelle 10 liegen die Stege 78 des elastischen Bauteils 70 an den Enden des Gewindebauteils 50 an oder weisen nur geringe Abstände von diesen auf.

Der Eingriff der Zunge 72 des elastischen Bauteils 70 in die Öffnung 27 in dem ersten Bügel 20 und das Umgreifen der seitlichen Ränder des Flansches 24 des ersten Bügels 20 durch die abgewinkelten Bereiche 75 des elastischen Bauteils unterbinden eine Rotation des elastischen Bauteils 70 relativ zu dem ersten Bügel 20. Die Anlage der parallelen Stege 78 an den Enden des Gewindebauteils 50 können dazu beitragen, eine Rotation des Gewindebauteils 50 relativ zu dem elastischen Bauteil 70 und damit mittelbar auch relativ zu dem ersten Bügel 20 zu unterbinden.

Insgesamt entsteht eine formschlüssige Führung zwischen dem Gewindebauteil 50, dem elastischen Bauteil 70 und dem ersten Bügel 20, die erforderliche Bewegungen des Gewindebauteils 50 relativ zu dem ersten Bügel (nämlich um die Schwenkachse 58; vgl. Figur 6) zulässt, jedoch eine Rotation des Gewindebauteils 50 um die Achse der zweiten Spannschraube 60 (vgl. Figuren 1 bis 3) und des Innengewindes 56 weitgehend oder vollständig unterbindet.

### Bezugszeichenliste:

- 10: Rohrschelle
- 16: Befestigungsmutter an der Rohrschelle 10
- 18: Mittelachse der Rohrschelle 10 und Längsachse eines in der vorgesehenen Weise in die Rohrschelle 10 eingelegten Rohrs oder Schlauchs
- 20: erster Bügel
- 21: erstes Ende des ersten Bügels 20
- 22: zweites Ende des ersten Bügels 20
- 24: Flansch an dem zweiten Ende 22 des ersten Bügels 20
- 25: Mulde in dem Flansch 24 für das Gewindebauteil 50
- 26: Öffnung in dem Flansch 24 für den Schaft 64 der zweiten Spannschraube 60
- 27: Öffnung in dem ersten Bügel 20, in die die Zunge 72 des elastischen Bauteils 70 eingreift
- 30: zweiter Bügel
- 31: erstes Ende des zweiten Bügels 30
- 32: zweites Ende des zweiten Bügels 30
- 34: Erhebung an dem zweiten Ende des Bügels 30 neben dem Einschnitt 36
- 36: Einschnitt an dem zweiten Ende 32 des zweiten Bügels 30
- 40: erste Spannschraube zwischen den ersten Enden 21, 31 der Bügel 20, 30 der Rohrschelle 10
- 50: Gewindebauteil am zweiten Ende 22 des ersten Bügels 20
- 54: Abflachung an dem Gewindebauteil 50
- 56: Innengewinde an dem Gewindebauteil 50
- 58: Schwenkachse des Gewindebauteils 50
- 60: zweite Spannschraube
- 62: Kopf der zweiten Spannschraube 60
- 64: Schaft der zweiten Spannschraube 60
- 70: elastisches Bauteil der Rohrschelle 10
- 71: erster Bereich des elastischen Bauteils 70 mit Gestalt eines Ausschnitts einer Mantelfläche eines Kreiszylinders
- 72: Zunge an dem elastischen Bauteil 70
- 73: zum Anliegen an dem Gewindebauteil 50 vorgesehener zweiter Bereich des elastischen Bauteils
- 74: Biegekante zwischen dem abgewinkelten Bereich 75 und dem übrigen elastischen Bauteil 70
- 75: abgewinkelter Bereich des elastischen Bauteils 70
- 76: Einschnitt in dem ersten Bereich 71
- 78: Steg an dem elastischen Bauteil 70
- 82: elastisches Profil an dem ersten Bügel 20
- 83: elastisches Profil an dem zweiten Bügel 30

## Patentansprüche

1. **Rohrschelle** (10), mit:
einem **Schellenkörper** mit einem **ersten Bügel** (20) und einem **zweiten Bügel** (30), zum Umfassen und Halten eines Rohrs (12) oder eines Schlauchs;
einer **Gelenkeinrichtung** (40) zum gelenkigen Verbinden eines ersten Endes (21) des ersten Bügels (20) mit einem ersten Ende (31) des zweiten Bügels (30);
einem **Gewindebauteil** (50) mit einem Innengewinde (56), wobei das Gewindebauteil (50) schwenkbar an einem Flansch (24) an dem zweiten Ende (22) des ersten Bügels (20) gelagert ist;
einem **elastischen Bauteil** (70) zum Ausüben einer Kraft auf das Gewindebauteil (50) zum elastischen Halten des Gewindebauteils (50) in einer vorbestimmten Winkelposition oder in einem vorbestimmten Bereich von Winkelpositionen,
wobei das **elastische Bauteil** (70) an drei Seiten die Ränder des **Flansches** (24) an dem zweiten Ende (22) des ersten Bügels (20) jeweils zumindest teilweise **umgreift,**
**dadurch gekennzeichnet, dass**
das elastische Bauteil (70) eine **Zunge** (72) aufweist, die in eine **Öffnung** (27) in einem an den Flansch (24) angrenzenden gekrümmten Bereich des ersten Bügel (20) **eingreift.**

2. Rohrschelle (10) nach dem vorangehenden Anspruch, bei der
das **elastische Bauteil** (70) von der Außenseite der Rohrschelle (10) her das Gewindebauteil (50) und den Flansch (24) an dem zweiten Ende (22) des ersten Bügels (20) umgreift,
das elastische Bauteil (70) an zwei einander gegenüberliegenden Rändern jeweils einen **abgewinkelten Bereich** (75) aufweist,
der Flansch (24) an dem zweiten Ende (22) des ersten Bügels (20) zumindest teilweise zwischen den abgewinkelten Bereichen (75) des elastischen Bauteils (70) angeordnet ist.

3. Rohrschelle (10) nach dem vorangehenden Anspruch, bei der die **abgewinkelten Bereiche** (75) des elastischen Bauteils (70) **parallel** zu einander angeordnet sind.

4. Rohrschelle (10) nach einem der Ansprüche 2 und 3, bei der die **abgewinkelten Bereiche** (75) des elastischen Bauteils (70) **orthogonal** zu einer **Längsachse** (18) eines in der vorgesehenen Weise in die Rohrschelle (10) eingelegten Rohrs oder Schlauchs angeordnet sind.

5. Rohrschelle (10) nach einem der Ansprüche 2 bis 4, bei der
jeder abgewinkelte Bereiche (75) jeweils an einer Biegekante (74) gegenüber einem angrenzenden Bereich des elastischen Bauteils (70) abgewinkelt ist,
diese Biegekanten (74) im Wesentlichen parallel zu einander und im Wesentlichen orthogonal zu einer Längsachse (18) eines in der vorgesehenen Weise in die Rohrschelle (10) eingelegten Rohrs oder Schlauchs angeordnet sind.

6. Rohrschelle (10) nach einem der Ansprüche 2 bis 5, bei der die **abgewinkelten Bereiche** (75) jeweils im Wesentlichen **rechteckig** ausgebildet sind.

7. Rohrschelle (10) nach Anspruch 6 in Rückbezug auf Anspruch 5, bei der
die abgewinkelten Bereiche jeweils im Wesentlichen länglich rechteckig mit einem Paar längerer Seiten und einem Paar kürzerer Seiten sind,
die Biegekanten (74) je eine der beiden längeren Seiten jedes rechteckigen abgewinkelten Bereichs (75) bilden.

8. Rohrschelle (10) nach einem der vorangehenden Ansprüche, bei der das elastische Bauteil (70) aus einem mehrfach gebogenen Stück Metallblech gebildet ist.

9. Rohrschelle (10) nach einem der vorangehenden Ansprüche, bei der die abgewinkelten Bereiche () des elastischen Bauteils (70) zumindest entweder eine rotatorische oder eine translatorische **Bewegung** des elastischen Bauteils (70) relativ zu dem Flansch (24) an dem zweiten Ende (22) des ersten Bügels (20) **formschlüssig unterbindet.**

10. Rohrschelle (10) nach einem der vorangehenden Ansprüche, bei der die **Zunge** (72) im Wesentlichen **rechteckig** ist.

11. Rohrschelle (10) nach einem der vorangehenden Ansprüche, bei der der Eingriff der Zunge (72) des elastischen Bauteils (70) in die Öffnung (27) in dem ersten Bügel (20) zumindest entweder eine rotatorische oder eine translatorische **Bewegung** des elastischen Bauteils (70) relativ zu dem Flansch (24) an dem zweiten Ende (22) des ersten Bügels (20) **formschlüssig unterbindet.**

12. Rohrschelle (10) nach einem der vorangehenden Ansprüche, bei der das **Gewindebauteil** (50) an einer **Rotation** um die Achse seines Innengewindes relativ zu dem elastischen Bauteil (70) **formschlüssig gehindert** ist.

## Claims

1. **Pipe clamp** (10), comprising:
a **clamp body** having a **first bracket** (20) and a **second bracket** (30), for enclosing and supporting a pipe or a hose;
**hinge means** (40) for articulated connecting a first end (21) of the first bracket (20) and a first end (31) of the second bracket (30);
a **threaded member** (50) with an internal thread (56), wherein the threaded member (50) is pivotally supported at a flange (24) at a second end (22) of the first bracket (20);
an **elastic member** (70) for exerting a force on the threaded member (50) for resiliently holding the threaded member (50) in a predetermined angular position or in a predetermined range of angular positions,
wherein the **elastic member** (70) on three sides at least partially embraces the edges of the **flange** (24) at the second end (22) of the first bracket (20),
**characterised in that**
the elastic member (70) has a **tongue** (72) **engaging** in an **opening** (27) in a curved region of the first bracket (20) adjacent to the flange (24).

2. Pipe clamp (10) according to the preceding claims, wherein
the **elastic member** (70) from the outside of the pipe claim (10) embraces the threaded member (50) and the flange (24) at the second end (22) of the first bracket (20),
the elastic member (70) comprises **angled regions** (75) at each of two opposing edges,
the flange (24) at the second end (22) of the first bracket (20) is arranged at least partially between the angled regions (75) of the elastic member (70).

3. Pipe clamp (10) according to the preceding claim, wherein the **angled regions** (75) of the elastic member (70) are arranged **parallel** to each other.

4. Pipe clamp (10) according to one of the claims 2 and 3, wherein the angled regions (75) of the elastic member (70) are arranged **orthogonal** to a **longitudinal axis** (18) of a pipe or hose inserted in the pipe clamp (10) in the intended manner.

5. Pipe clamp (10) according to one of the claims 2 to 4, wherein
each angled region (75) is angled at a bending edge (74) relative to an adjacent region of the elastic member (70),
these bending edges (74) are arranged substantially parallel to one another and substantially orthogonal to a longitudinal axis (18) of a pipe or hose inserted in the pipe claim (10) in the intended manner.

6. Pipe clamp (10) according to any one of the claims 2 to 5, wherein each of the angled regions (75) is substantially rectangular.

7. Pipe clamp (10) according to claim 6 in reference to claim 5, wherein
each of the angled regions is substantially oblong rectangular with a pair of longer sides and a pair of shorter sides,
each of the bending edges (74) forms one of the two longer sides of each of the rectangular angled regions (75).

8. Pipe clamp (10) according to one of the preceding claims, wherein the elastic member (70) is formed from a piece of metal sheet bent multiply.

9. Pipe clamp (10) according to one of the preceding claims, wherein the angled regions () of the elastic member (70) **positively prevent** at least one of a rotational and a translational **movement** of the elastic region (70) relative to the flange (24) at the second end (22) of the first bracket (20).

10. Pipe clamp (10) according to one of the preceding claims, wherein the **tongue** (72) is essentially **rectangular.**

11. Pipe clamp (10) according to one of the preceding claims, wherein the engagement of the tongue (72) of the elastic member (70) in the opening (27) in the first bracket (20) **positively prevents** at least one of a rotational and a translational **movement** of the elastic member (70) relative to the flange (24) at the second end (22) of the first bracket (20).

12. Pipe clamp (10) according to one of the preceding claims, wherein the **threaded member** (50) is **positively prevented** from **rotating** about the axis of its internal thread relative to the elastic member (70).

## Revendications

1. **Collier de serrage** (10), avec :
un **corps de collier** ayant un **premier étrier** (20) et un **second étrier** (30), pour saisir et maintenir un tube (12) ou un tuyau ;
un **dispositif de charnière** (40) pour relier de manière articulée une première extrémité (21) du premier étrier (20) à une première extrémité (31) du second étrier (30) ;
un **composant fileté** (50) ayant un filetage interne (56), le composant fileté (50) étant logé pivotant sur une bride (24) de la seconde extrémité (22) du premier étrier (20) ;
un **composant élastique** (70) pour exercer une force sur le composant fileté (50) afin de maintenir de façon élastique le composant fileté (50) dans une position angulaire prédéterminée ou dans une plage prédéterminée de positions angulaires,
le **composant élastique** (70) entourant au moins en partie sur trois côtés les bords de la bride (24) de la seconde extrémité (22) du premier étrier (20),
**caractérisé en ce que**
le composant élastique (70) est muni d'une **languette** (72) qui s'**engage** dans une **ouverture** (27) réalisée dans une zone courbée du premier étrier (20) adjacente à la bride (24).

2. Collier de serrage (10) selon la revendication précédente, dans lequel
le **composant élastique** (70) entoure, depuis l'extérieur du collier de serrage (10), le composant fileté (50) et la bride (24) de la seconde extrémité (22) du premier étrier (20),
le composant élastique (70) est muni, sur deux bords opposés l'un à l'autre, d'une **zone coudée** (75),
la bride (24) de la seconde extrémité (22) du premier étrier (20) est disposée au moins en partie entre les zones coudées (75) du composant élastique (70).

3. Collier de serrage (10) selon la revendication précédente, dans lequel les **zones coudées** (75) du composant élastique (70) sont disposées **parallèlement** entre elles.

4. Collier de serrage (10) selon l'une des revendications 2 et 3, dans lequel les zones coudées (75) du composant élastique (70) sont disposées **orthogonalement** à un **axe longitudinal** (18) d'un tube ou d'un tuyau inséré de la manière prévue dans le collier de serrage (10).

5. Collier de serrage (10) selon l'une des revendications 2 à 4, dans lequel
chaque zone coudée (75) est coudée, au niveau d'une arête de pliage (74), par rapport à une zone adjacente du composant élastique (70),
ces arêtes de pliage (74) sont disposées de façon sensiblement parallèle entre elles et sensiblement orthogonalement à un axe longitudinal (18) d'un tube ou d'un tuyau inséré de la manière prévue dans le collier de serrage (10).

6. Collier de serrage (10) selon l'une des revendications 2 à 5, dans lequel les zones coudées (75) sont chacune de forme sensiblement rectangulaire.

7. Collier de serrage (10) selon la revendication 6 se rapportant à la revendication 5, dans lequel
les zones coudées sont chacune sensiblement rectangulaires et oblongues avec une paire de côtés plus longs et une paire de côtés plus courts,
les arêtes de pliage (74) forment chacune l'un des deux côtés plus longs de chaque zone coudée rectangulaire (75).

8. Collier de serrage (10) selon l'une des revendications précédentes, dans lequel le composant élastique (70) est formé à partir d'une pièce de tôle pliée plusieurs fois.

9. Collier de serrage (10) selon l'une des revendications précédentes, dans lequel les zones coudées () du composant élastique (70) **empêchent par conjugaison de forme** au moins un **mouvement** soit de rotation soit de translation du composant élastique (70) par rapport à la bride (24) de la seconde extrémité (22) du premier étrier (20).

10. Collier de serrage (10) selon l'une des revendications précédentes, dans lequel la **languette** (72) est sensiblement **rectangulaire.**

11. Collier de serrage (10) selon l'une des revendications précédentes, dans lequel l'engagement de la languette (72) du composant élastique (70) dans l'ouverture (27) du premier étrier (20) **empêche par conjugaison de forme** au moins un **mouvement** soit de rotation soit de translation du composant élastique (70) par rapport à la bride (24) de la seconde extrémité (22) du premier étrier (20).

12. Collier de serrage (10) selon l'une des revendications précédentes, dans lequel le **composant fileté** (50) est **empêché par conjugaison de forme** de **tourner** autour de l'axe de son filetage interne par rapport au composant élastique (70).
